# FASCICULE DE BREVET EUROPEEN

(11) **EP 2 693 099 B1**
(45) Date de publication et mention de la délivrance du brevet: **22.04.2015**
(21) Numéro de dépôt: 13173798.3
(22) Date de dépôt: 26.06.2013
(51) Int. Cl.: F17C 13/12, F16K 17/00, G05D 16/20

(54) **Procédé et dispositif de contrôle de la pression au sein d'un réservoir d'hydrogène**
Druckkontrollverfahren und -vorrichtung in einem Wasserstoffbehälter
Method and device for monitoring pressure inside a hydrogen tank

(30) Priorité: 01.08.2012 FR 1257463
(43) Date de publication de la demande: 05.02.2014
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Barthelemy, Hervé, 77144 Montevrain (FR)
(74) Mandataire: De Cuenca, Emmanuel Jaime

(56) Documents cités:
- EP-A1- 1 990 568
- WO-A1-2005/038735
- US-A1- 2005 183 425

## Description

La présente invention concerne un procédé et un dispositif de contrôle de la pression au sein d'un réservoir d'hydrogène.

L'invention concerne en particulier un procédé et un dispositif de contrôle de la pression au sein d'un réservoir d'hydrogène pour éviter les risques de rupture par fragilisation due à hydrogène.

L'invention concerne plus particulièrement un procédé de contrôle de la pression au sein d'un réservoir cryogénique mobile, notamment un réservoir monté sur une plateforme mobile susceptible d'être tractée par camion, le réservoir étant en acier et contenant de l'hydrogène liquide sous pression.

L'hydrogène gazeux peut fragiliser des matériaux sous contrainte dans certains domaines de température (cf. par exemple l'article « Barthelemy, H. and Pressouyre, G.M., Hydrogen Gas Embrittlement of steels Synthesis of the CEC hydrogen energy program (1975-1983) », et plus particulièrement les aciers inoxydables (cf. l'article Barthélémy, H., « Hydrogen gas embrittlement of some austenitic stainless steels, Hydrogen and Materials », Beijing 9-13 May, 1988).

WO 2005/038735 A1 divulgue un procédé de contrôle de la pression au sein d'un réservoir cryogénique mobile, notamment un réservoir monté sur une plateforme mobile susceptible d'être tractée par camion. Le réservoir comprend un premier réservoir principal et un second réservoir écran thermique.

Le procédé comprend une mesure continue ou périodique de la pression et du niveau de liquide au sein du réservoir principale et, en cas de pression trop importante ou niveau de liquide trop bas, du gaz est évacué du réservoir écran thermique pour remplacer de la vapeur avec du liquide et, si nécessaire du gaz est évacué du réservoir principal par une vanne actionnée à distance.

L'hydrogène est notamment un facteur de fragilisation pour de nombreux aciers inoxydables.

Le transport d'hydrogène liquide est généralement réalisé via des réservoirs cryogéniques (isolés sous vide). Ces réservoirs cryogéniques sont par exemple montés sur de semi-remorques. De tels réservoirs sont généralement fabriqués en aciers inoxydables. Pour éviter les risques de fragilisation de l'acier du réservoir il est donc préférable d'utiliser un acier moins sujet aux risques de fragilisation (par exemple l'acier inoxydable 316L).

Une autre solution consiste à utiliser d'autres matériaux constitutifs pour le réservoir, par exemple les aciers 304L ou 304N. Ces solutions génèrent cependant des réservoirs moins lourds et/ou moins coûteux mais ne sont pas acceptables telles quelles car le réservoir de la semi-remorque correspondante risque d'être rompu par fragilisation due à l'hydrogène selon les conditions de fonctionnement (cf. le second article cité ci-dessus).

De plus, la pression dans le réservoir d'hydrogène a tendance à augmenter lorsqu'on commence à le vidanger car le niveau d'hydrogène liquide baisse.

Un but de la présente invention est de pallier tout ou partie des inconvénients de l'art antérieur relevés ci-dessus.

A dette fin, le procédé selon l'invention, par ailleurs conforme à la définition générique qu'en donne le préambule ci-dessus, est essentiellement caractérisé en ce que le procédé comprend une mesure continue ou périodique de la température au sein du réservoir et, lorsque la température mesurée excède un seuil haut de température déterminé compris entre moins 140°C et moins 160°C, la pression au sein du réservoir est limitée à une valeur inférieure ou égale à un seuil de pression (Pmax) déterminé compris entre 1,5 et 3 bar.

Par ailleurs, des modes de réalisation de l'invention peuvent comporter l'une ou plusieurs des caractéristiques suivantes :
- le procédé comprend à la fois une mesure continue ou périodique de la température au sein du réservoir et une mesure continue ou périodique du niveau du liquide au sein du réservoir et, lorsque la température mesurée excède un seuil haut de température déterminé compris entre moins 140°C et moins 160°C et que le niveau de liquide au sein du réservoir est en dessous d'un niveau seuil de liquide déterminé, par exemple compris entre 3 % et 15 % du niveau de liquide maximale dans le réservoir, la pression au sein du réservoir est limitée à une valeur inférieure ou égale à un seuil de pression déterminé compris entre 1,5 et 3 bar,
- la pression au sein du réservoir est limitée automatiquement à une valeur inférieure ou égale au seuil de pression déterminé après une livraison de liquide du réservoir à une ou plusieurs cuves réceptrices,
- le seuil de pression déterminé est égal à 2bar,
- le seuil haut de température est égal à moins 150°C,
- le réservoir est composé de l'un au moins des aciers suivants : du type 321, 204, 302, 304, 304L ou un acier stabilisé à l'azote tel que 204N, 302N, 304N,

L'invention peut concerner également un dispositif de livraison d'hydrogène liquide comprenant un réservoir monté sur une plateforme mobile susceptible d'être tractée par camion, le réservoir étant en acier et contenant de l'hydrogène liquide sous pression, le réservoir comprenant un capteur de température situé dans la partie supérieure du réservoir, un capteur de pression, un organe libération sélective de gaz vers l'extérieur du réservoir et une logique électronique reliée au capteur de température, au capteur de pression et à l'organe organe libération sélective de gaz, la logique électronique étant configurée pour libérer automatiquement du gaz hors du réservoir et limiter la pression au sein du réservoir à un seuil de pression déterminé compris entre 1,5 et 3 bar dès que la température mesurée excède un seuil haut de température déterminé compris entre moins 140°C et moins 160°C.

Selon d'autres particularités possibles :
- l'organe libération sélective comprend au moins l'un parmi : un déverseur, une vanne,
- le réservoir comprend un capteur de niveau de liquide au sein du réservoir, ledit capteur de niveau de liquide étant relié à la logique électronique,
- le réservoir est composé de l'un au moins des aciers suivants : un acier du type 321, 204, 302, 304, 304L ou un acier stabilisé à l'azote tel que 204N, 302N, 304N.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures jointes dans lesquelles :
- la figure 1 représente de façon schématique et partielle, un exemple de dispositif de mise en oeuvre de l'invention,
- la figure 2 représente de façon schématique et partielle un exemple d'étapes pouvant être mises en oeuvre par l'invention.

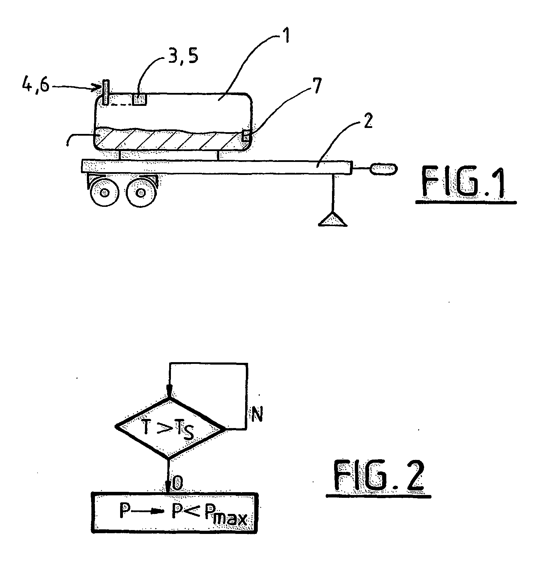

Le dispositif de livraison d'hydrogène liquide représenté à la figure 1 comprend un réservoir 1 monté sur une plateforme 2 mobile susceptible d'être tractée par camion. Le réservoir 1 est en acier inoxydable et contenant de l'hydrogène liquide sous pression. Plus précisément, le réservoir 1 peut être constitué d'un acier sujet à la fragilisation au contact d'hydrogène gazeux, par exemple un acier tel que 304N, ou autres aciers inoxydables non stables (comme par exemple du type 321, 204, 302, 304, 304L) ou stabilisés à l'azote tels que 204N, 302N, 304N,...).

Pour éviter une fragilisation qui aurait pourrait provoquer une rupture du réservoir 1 et un accident grave, le dispositif comprend un système de régulation de la pression au sein du réservoir 1.

Ainsi, le réservoir 1 comporte un capteur 3 de température situé de préférence dans la partie supérieure du réservoir 1. Le capteur 3 de température est par exemple un thermocouple ou tout autre organe approprié.

Le réservoir 1 comprend également un organe 4 libération sélective de gaz vers l'extérieur du réservoir, par exemple une vanne, un déversoir ou tout autre organe approprié équivalent permettant de faire baisser sélectivement la pression dans le réservoir 1. Le réservoir peut comprendre également un capteur de pression 6.

Le réservoir 1 comprend en outre une logique 5 électronique reliée au capteur 3 de température, au capteur 6 de pression et à l'organe organe 4 libération sélective de gaz. Cette logique 5 électronique est configurée pour libérer automatiquement du gaz hors du réservoir 1 afin de réduire la pression au sein du réservoir 1 à un seuil de pression Pmax déterminé compris entre 1,5 et 3 bar et de préférence égal à 2bar dès que la température T mesurée par le capteur 4 excède un seuil haut de température Ts déterminé compris en moins 140°C et moins 160°C et de préférence égal à moins 150°C (cf. figure 2).

Cette mesure permet de réduire très fortement les risques de fragilisation du réservoir 1.

L'invention permet en particulier de garantir qui l'acier constitutif du réservoir se trouve soumis à une gamme de pression qui risque moins de le fragiliser du fait de son exposition à l'hydrogène.

Ceci permet d'utiliser pour le transport d'hydrogène des réservoirs constitués d'acier relativement peu coûteux et qui permettent de réduire la masse du réservoir, sans risquer pour autant un phénomène de fragilisation.

## Revendications

1. Procédé de contrôle de la pression au sein d'un réservoir (1) cryogénique mobile, notamment un réservoir (1) monté sur une plateforme (2) mobile susceptible d'être tractée par camion, le réservoir (1) étant en acier et contenant de l'hydrogène liquide sous pression, le procédé comprenant: une mesure continue ou périodique de la température au sein du réservoir (1) et, lorsque la température mesurée excède un seuil haut (Ts) de température déterminé compris entre moins 140°C et moins 160°C, la pression au sein du réservoir (1) est limitée à une valeur inférieure ou égale à un seuil de pression (Pmax) déterminé compris entre 1,5 et 3 bar.

2. Procédé selon la revendication 1, **caractérisé en ce qu'il** comprend une mesure continue ou périodique du niveau du liquide au sein du réservoir et, lorsque le niveau de liquide au sein du réservoir est en dessous d'un niveau seuil de liquide déterminé, la pression au sein du réservoir (1) est limitée à une valeur inférieure égale à un seuil de pression (Pmax) déterminée comprise entre 1,5 et 3 bar.

3. Procédé selon la revendication 2, **caractérisé en ce que** le niveau seuil de liquide déterminé est compris entre 3 % et 15 % du niveau de liquide maximal dans le réservoir (1).

4. Procédé selon l'une quelconque des revendications 2 ou 3, **caractérisé en ce que** le procédé comprend à la fois une mesure continue ou périodique de la température au sein du réservoir (1) et une mesure continue ou périodique du niveau du liquide au sein du réservoir et, lorsque la température mesurée excède un seuil haut (Ts) de température déterminé compris entre moins 140°C et moins 160°C et que le niveau de liquide au sein du réservoir est en dessous d'un niveau seuil de liquide déterminé, la pression au sein du réservoir (1) est limitée à une valeur inférieure ou égale à un seuil de pression (Pmax) déterminé compris entre 1,5 et 3 bar.

5. Procédé selon l'une quelconque des revendications 1 à 4, **caractérisé en ce que** la pression au sein du réservoir (1) est limitée automatiquement à une valeur inférieure ou égale au seuil de pression (Pmax) déterminé après une livraison de liquide du réservoir (1) à une ou plusieurs cuves réceptrices.

6. Procédé selon l'une quelconque des revendications 1 à 5, **caractérisé en ce que** le seuil de pression (Pmax) déterminé est égal à 2bar.

7. Procédé selon l'une quelconque des revendications 1 à 6, **caractérisé en ce que** le seuil haut (Ts) de température est égal à moins 150°C.

8. Procédé selon l'une quelconque des revendications 1 à 7, **caractérisé en ce que** le réservoir (1) est composé de l'un au moins des aciers suivants : du type 321, 204, 302, 304, 304L ou un acier stabilisé à l'azote tel que 204N, 302N, 304N.

9. Dispositif de livraison d'hydrogène liquide comprenant un réservoir (1) monté sur une plateforme (2) mobile susceptible d'être tractée par camion, le réservoir (1) étant en acier et contenant de l'hydrogène liquide sous pression, le réservoir (1) comprenant un capteur (3) de température situé dans la partie supérieure du réservoir (1), un capteur de pression (6), un organe (4) libération sélective de gaz vers l'extérieur du réservoir et une logique (5) électronique reliée au capteur (3) de température, au capteur (6) de pression et à l'organe organe (4) libération sélective de gaz, la logique (5) électronique étant configurée pour libérer automatiquement du gaz hors du réservoir (1) et limiter la pression au sein du réservoir (1) à un seuil de pression (Pmax) déterminé compris entre 1,5 et 3 bar dès que la température mesurée excède un seuil haut de température (Ts) déterminé compris entre moins 140°C et moins 160°C.

10. Dispositif selon la revendication 9, **caractérisé en ce que** l'organe (4) libération sélective comprend au moins l'un parmi : un déverseur, une vanne.

11. Dispositif selon la revendication 9 ou 10, **caractérisé en ce que** le réservoir (1) comprend un capteur (7) de niveau de liquide au sein du réservoir (1), ledit capteur (7) de niveau de liquide étant relié à la logique (5) électronique.

12. Dispositif selon l'une quelconque des revendications 9 à 11, **caractérisé en ce que** le réservoir (1) est composé de l'un au moins des aciers suivants : un acier du type 321, 204, 302, 304, 304L ou un acier stabilisé à l'azote tel que 204N, 302N, 304N.

## Patentansprüche

1. Verfahren zum Regeln des Drucks in einem mobilen Kryo-Tank (1), insbesondere in einem Behälter (1), der auf einer mobilen Plattform (2) gelagert ist, der von einem Lastkraftwagen gezogen werden kann, wobei der Behälter (1) aus Stahl ist und unter Druck stehenden flüssigen Wasserstoff enthält, wobei das Verfahren Folgendes umfasst: eine kontinuierliche oder regelmäßige Messung der Temperatur in dem Behälter (1) und, wenn die gemessene Temperatur einen bestimmten oberen Temperaturschwellenwert (Ts) übersteigt, der zwischen mindestens 140 °C und weniger als 160 °C beträgt, der Druck in dem Behälter (1) auf einen Wert kleiner oder gleich einem bestimmten Druckschwellenwert (Pmax) begrenzt wird, der zwischen 1,5 und 3 bar beträgt.

2. Verfahren nach Anspruch 1, **dadurch gekennzeichnet, dass** es eine kontinuierliche oder regelmäßige Messung des Flüssigkeitsstands in dem Behälter umfasst und, wenn der Flüssigkeitsstand in dem Behälter unterhalb eines bestimmten Flüssigkeitsgrenzstands ist, der Druck in dem Behälter (1) auf einen Wert kleiner oder gleich einem bestimmten Druckschwellenwert (Pmax) begrenzt wird, der zwischen 1,5 und 3 bar beträgt.

3. Verfahren nach Anspruch 2, **dadurch gekennzeichnet, dass** der bestimmte Flüssigkeitsgrenzstand zwischen 3 % und 15 % des maximalen Flüssigkeitsstands in dem Behälter (1) beträgt.

4. Verfahren nach einem der Ansprüche 2 oder 3, **dadurch gekennzeichnet, dass** das Verfahren gleichzeitig eine kontinuierliche oder regelmäßige Messung der Temperatur in dem Behälter (1) und eine kontinuierliche oder regelmäßige Messung des Flüssigkeitsstands in dem Behälter umfasst und, wenn die gemessene Temperatur einen oberen Temperaturschwellenwert (Ts) übersteigt, der zwischen mindestens 140 °C und weniger als 160 °C bestimmt ist, und wenn der Flüssigkeitsstand in dem Behälter unterhalb eines bestimmten Flüssigkeitsgrenzstands ist, der Druck in dem Behälter (1) auf einen Wert kleiner oder gleich einem bestimmten Druckschwellenwert (Pmax) begrenzt wird, der zwischen 1,5 und 3 bar beträgt.

5. Verfahren nach einem der Ansprüche 1 bis 4, **dadurch gekennzeichnet, dass** der Druck in dem Behälter (1) nach einer Abgabe von Flüssigkeit aus dem Behälter (1) an einen oder mehrere Auffangbehälter automatisch auf einen Wert kleiner oder gleich dem bestimmten Druckschwellenwert (Pmax) begrenzt wird.

6. Verfahren nach einem der Ansprüche 1 bis 5, **dadurch gekennzeichnet, dass** der bestimmte Druckschwellenwert (Pmax) gleich 2 bar ist.

7. Verfahren nach einem der Ansprüche 1 bis 6, **dadurch gekennzeichnet, dass** der obere Temperaturschwellenwert (Ts) mindestens gleich 150 °C ist.

8. Verfahren nach einem der Ansprüche 1 bis 7, **dadurch gekennzeichnet, dass** der Behälter (1) aus mindestens einem der folgenden Stähle besteht: einem Stahl des Typs 321, 204, 302, 304, 304L oder einem stickstoffstabilisierten Stahl wie 204N, 302N, 304N.

9. Vorrichtung zur Abgabe von flüssigem Wasserstoff, umfassend einen Behälter (1), der auf einer mobilen Plattform (2) gelagert ist, der von einem Lastkraftwagen gezogen werden kann, wobei der Behälter (1) aus Stahl ist und unter Druck stehenden flüssigen Wasserstoff enthält, wobei der Behälter (1) Folgendes umfasst: einen Temperaturfühler (3) im oberen Teil des Behälters (1), einen Drucksensor (6), ein Organ (4) zum selektiven Freisetzen von Gas nach außerhalb des Behälters und eine elektronische Logik (5), die mit dem Temperaturfühler (3), dem Drucksensor (6) und dem Organ (4) zum selektiven Freisetzen von Gas verbunden ist, wobei die elektronische Logik (5) konfiguriert ist, um automatisch Gas aus dem Behälter (1) freizusetzen und den Druck im Behälter (1) auf einen Druckschwellenwert (Pmax) zu begrenzen, der zwischen 1,5 und 3 bar beträgt, sobald die gemessene Temperatur einen bestimmten oberen Temperaturschwellenwert (Ts) übersteigt, der zwischen mindestens 140 °C und weniger als 160 °C beträgt.

10. Vorrichtung nach Anspruch 9, **dadurch gekennzeichnet, dass** das Organ (4) zum selektiven Freisetzen von Gas mindestens eines umfasst von: ein Überströmventil, einen Schieber.

11. Verfahren nach Anspruch 9 oder 10, **dadurch gekennzeichnet, dass** der Behälter (1) einen Geber (7) für den Flüssigkeitsstand im Behälter (1) umfasst, wobei der Flüssigkeitsstandgeber (7) mit der elektronischen Logik (5) verbunden ist.

12. Vorrichtung nach einem der Ansprüche 9 bis 11, **dadurch gekennzeichnet, dass** der Behälter (1) aus mindestens einem der folgenden Stähle besteht: einem Stahl des Typs 321, 204, 302, 304, 304L oder einem stickstoffstabilisierter Stahl wie 204N, 302N, 304N.

## Claims

1. Method for controlling the pressure in a transportable cryogenic tank (1), in particular a tank (1) which is mounted on a transportable platform (2) which can be towed by a truck, the tank (1) being made of steel and containing pressurised liquid hydrogen, the method comprising: continuously or periodically measuring the temperature in the tank (1) and, when the measured temperature exceeds a set upper temperature threshold (Ts) of between minus 140 °C and minus 160 °C, the pressure in the tank (1) is limited to a value which is less than or equal to a set pressure threshold (Pmax) of between 1.5 and 3 bar.

2. Method according to claim 1, **characterised in that** it comprises continuously or periodically measuring the level of the liquid in the tank and, when the liquid level in the tank drops below a set liquid level threshold, the pressure in the tank (1) is limited to a value which is less than or equal to a set pressure threshold (Pmax) of between 1.5 and 3 bar.

3. Method according to claim 2, **characterised in that** the set liquid level threshold is between 3 % and 15 % of the maximum liquid level in the tank (1).

4. Method according to either claim 2 or claim 3, **characterised in that** the method comprises both continuously or periodically measuring the temperature in the tank (1) and continuously or periodically measuring the level of the liquid in the tank and, when the measured temperature exceeds a set upper temperature threshold (Ts) of between minus 140 °C and minus 160 °C, and the liquid level in the tank drops below a set liquid level threshold, the pressure in the tank (1) is limited to a value which is less than or equal to a set pressure threshold (Pmax) of between 1.5 and 3 bar.

5. Method according to any of claims 1 to 4, **characterised in that** the pressure in the tank (1) is automatically limited to a value which is less than or equal to the set pressure threshold (Pmax) after a delivery of liquid from the tank (1) to one or more storage containers.

6. Method according to any of claims 1 to 5, **characterised in that** the set pressure threshold (Pmax) is equal to 2 bar.

7. Method according to any of claims 1 to 6, **characterised in that** the upper temperature threshold (Ts) is equal to minus 150 °C.

8. Method according to any of claims 1 to 7, **characterised in that** the tank (1) is made of at least one of the following steels: 321, 204, 302, 304 and 304L steels or a nitrogen-stabilised steel such as 204N, 302N and 304N steels.

9. Device for delivering liquid hydrogen comprising a tank (1) which is mounted on a transportable platform (2) which can be towed by a truck, the tank (1) being made of steel and containing pressurised liquid hydrogen, the tank (1) comprising a temperature sensor (3) which is located in the upper part of the tank (1), a pressure sensor (6), a member (4) for selectively venting gas to the outside of the tank, and an electronic control system (5) which is connected to the temperature sensor (3), to the pressure sensor (6) and to the member (4) for selectively venting gas, the electronic control system (5) being configured to automatically vent gas out of the tank (1) and to limit the pressure in the tank (1) to a set pressure threshold (Pmax) of between 1.5 and 3 bar as soon as the measured temperature exceeds a set upper temperature threshold (Ts) of between minus 140 °C and minus 160 °C.

10. Device according to claim 9, **characterised in that** the selective venting member (4) comprises at least one of the following: an overflow system, a valve.

11. Device according to either claim 9 or claim 10, **characterised in that** the tank (1) comprises a liquid level sensor (7) in the tank (1), said liquid level sensor (7) being connected to the electronic control system (5).

12. Device according to any of claims 9 to 11, **characterised in that** the tank (1) is made of at least one of the following steels: 321, 204, 302, 304 and 304L steels or nitrogen-stabilised steels such as 204N, 302N and 304N steels.
